# EUROPEAN PATENT SPECIFICATION

(11) **EP 3 651 991 B1**
(45) Date of publication and mention of the grant of the patent: **09.04.2025**
(21) Application number: 18832121.0
(22) Date of filing: 11.07.2018
(51) Int. Cl.: B29C 65/18, B29C 65/50, B41J 2/005, G03G 15/00, B29C 65/56, B29C 65/72, B29C 65/78, B29C 65/82

(54) **INTERMEDIATE TRANSFER MEMBER**
ÜBERTRAGUNGS-ZWISCHENELEMENT
ÉLÉMENT DE TRANSFERT INTERMÉDIAIRE

(30) Priority: 14.07.2017 US 201762532400 P; 10.03.2018 US 201862641296 P; 03.06.2018 US 201862679839 P
(43) Date of publication of application: 20.05.2020
(73) Proprietor: Landa Corporation Ltd., 7612301 Rehovot (IL)
(72) Inventor: CHECHIK, Helena, 7621312 Rehovot (IL); LIVADERU, Shoham, 7683400 Moshav Sitriyya (IL); BAR-ON, Matan, 4528263Hod Hasharon (IL); ABAEV, Vadim, 7136258 Lod (IL)
(74) Representative: Becker Kurig & Partner Patentanwälte mbB
(86) International application number: PCT/IB2018/055126
(87) International publication number: WO 2019/012456

(56) References cited:
- EP-A1- 1 271 263
- WO-A1-2016/166690
- WO-A1-2016/166690
- JP-A- 2007 253 347

## Description

### CROSS REFERENCE TO RELATED APPLICATIONS

This patent application claims priority from U.S. Provisional Application No. 62/532,400, filed on July 14, 2017, from U.S. Provisional Application No. 62/641,296, filed on March 10, 2018, and from U.S. Provisional Application No. 62/679,839, filed on June 3, 2018, all of which are entitled "INTERMEDIATE TRANSFER MEMBER".

### FIELD AND BACKGROUND OF THE INVENTION

The present disclosure relates to an intermediate transfer member (ITM) used in a printing system in which liquid ink droplets are deposited at an image forming station onto a movable intermediate transfer member and transferred at an impression station from the intermediate transfer member onto a printing substrate. Specifically, this disclosure pertains to an intermediate transfer member formed as a flexible elongate belt, the ends of which are connected to each other by means of a heat-curable tape to form an endless blanket or belt. The disclosure further pertains to systems and devices for installing the heat-curable tape and the intermediate transfer member in corresponding printing systems.

The intermediate transfer member is formed of an elongate flexible belt, which is threaded through the printing system, and the free ends of the belt are connected to one another to form the endless belt of the intermediate transfer member. The portion or element used to connect the free ends of the belt is referred to herein as a seam element.

In document EP 1 271 263 Al, a kit for installing an endless belt in a printing system is disclosed, wherein the kit comprises a flexible belt (polyimide film) having first and second free ends (puzzle cut ends) configured to be guided along the printing system and a heat-curable tape, wherein said heat-curable tape is adapted to be applied onto said first and second free ends of said flexible belt, and to be heated so as to heat-cure said tape to the first and second free ends of the flexible belt, so as to form a seam connecting the first and second free ends thereby converting the flexible belt into an endless belt.

### SUMMARY OF THE INVENTION

The invention, in some embodiments, relates to a heat-curable tape for connecting ends of an elongate belt to form an intermediate transfer member suitable for use with indirect printing systems.

The invention, in some embodiments, relates to a kit for installing an intermediate transfer member in a printing system, the kit including an elongate belt and a heat-curable tape.

The invention, in some embodiments, relates to a printing system including an intermediate transfer member formed of an elongate belt and a heat-curable tape.

The invention, in some embodiments, relates to a kit for installing an intermediate transfer member in a printing system, the kit including a heat-curable tape and an adhesive.

The invention, in some embodiments, relates to a method for installing an intermediate transfer member in a printing system, the intermediate transfer member including an elongate belt and a heat-curable tape joining ends of the elongate belt at a seam.

The invention, in some embodiments, relates to a heater for heat-curing a heat-curable tape onto free ends of an elongate belt so as to form an intermediate transfer member of a printing system, to printing systems including such a heater, and to methods of using such a heater.

The invention, in some embodiments, relates to a kit for installing an endless belt in a printing system, the kit including an elongate belt and attachment mechanisms.

As is discussed in greater detail hereinbelow, a heat-curable tape according to the present invention includes a substrate layer and a solid silicone rubber layer disposed on the substrate layer. The heat curable tape is applied onto first and second free ends of a flexible belt guided through a suitable route of a printing system, and is then heated so as to heat-cure the solid silicone rubber to the free ends of the flexible belt, thereby to convert the flexible belt into an endless belt of an intermediate transfer member. Heat may be applied to the heat curable tape by a heater, forming part of the printing system in which the intermediate transfer member is being installed, the heater typically disposed beneath the free ends of the belt during heating of the heat-curable tape.

There is thus provided, in accordance with an embodiment of a first aspect of the invention, a kit for installing an endless belt in a printing system, the kit including:
- a flexible belt having first and second free ends configured to be guided along the printing system;
- a heat-curable tape, including a substrate layer and a solid silicone rubber layer disposed thereon,
wherein the heat-curable tape is adapted to be applied onto the first and second free ends of the flexible belt, and to be heated so as to heat-cure the solid silicone rubber layer of the tape to the first and second free ends of the flexible belt, so as to form a seam connecting the first and second free ends thereby converting the flexible belt into an endless belt.

In some embodiments of the first aspect of the invention, the flexible belt has a length within a range of 1 to 20 meters.

In some embodiments of the first aspect of the invention, the flexible belt has a length within a range of 5 to 20 meters.

In some embodiments of the first aspect of the invention, the flexible belt has a length within a range of 5 to 15 meters.

In some embodiments of the first aspect of the invention, the flexible belt has a length within a range of 5 to 12 meters.

In some embodiments of the first aspect of the invention, the flexible belt has a length within a range of 7 to 12 meters.

In some embodiments of the first aspect of the invention, the flexible belt has a width within a range of 0.1 to 2.0 meters.

In some embodiments of the first aspect of the invention, the flexible belt has a width within a range of 0.3 to 2.0 meters.

In some embodiments of the first aspect of the invention, the flexible belt has a width within a range of 0.5 to 2.0 meters.

In some embodiments of the first aspect of the invention, the flexible belt has a width within a range of 0.75 to 2.0 meters.

In some embodiments of the first aspect of the invention, the flexible belt has a width within a range of 0.75 to 1.5 meters.

In some embodiments of the first aspect of the invention, the flexible belt has a width within a range of 0.75 to 1.25 meters.

In some embodiments of the first aspect of the invention, the flexible belt has a thickness within a range of 50 to 3000µm.

In some embodiments of the first aspect of the invention, the flexible belt has a thickness within a range of 100 to 3000µm.

In some embodiments of the first aspect of the invention, the flexible belt has a thickness within a range of 200 to 3000µm.

In some embodiments of the first aspect of the invention, the flexible belt has a thickness within a range of 200 to 1500µm.

In some embodiments of the first aspect of the invention, the flexible belt has a thickness within a range of 300 to 1000µm.

In some embodiments of the first aspect of the invention, the flexible belt has a thickness within a range of 300 to 800µm.

In some embodiments of the first aspect of the invention, the flexible belt has a thickness within a range of 300 to 700µm.

In some embodiments of the first aspect of the invention, the flexible belt has a thickness within a range of 100 to 600µm.

It is not claimed that, following heat-curing of the solid silicone rubber layer, the tape has a tensile strength of at least 8 MPa.

It is not claimed that, following heat-curing of the solid silicone rubber layer, the tape has a shore A hardness of at least 45.

It is not claimed that, following heat-curing of the solid silicone rubber layer, the tape has a shore A hardness not greater than 80.

It is not claimed that, following heat-curing of the solid silicone rubber layer of the heat curable tape, the following properties are true:
the tape has a tensile strength of at least 8 MPa;
the tape has a shore A hardness of at least 45; and
a strength of the heat curable tape is directly proportional to a heat quantity applied to the solid silicone rubber layer during curing of the tape.

It is not claimed, following heat-curing of the solid silicone rubber layer, the solid silicone rubber layer has a shore A hardness in the range of 55 to 65.

In some embodiments of the first aspect of the invention, the solid silicone rubber includes a thermosetting polymer.

It is not claimed that the thermosetting polymer includes a platinum catalyzed addition-curing solid silicone rubber.

It is not claimed that the solid silicone rubber has a density in the range of 1.1 to 1.2 g/cm^3.

It is not claimed that the solid silicone rubber has a density of 1.15 g/cm^3.

It is not claimed that the solid silicone rubber has a shelf life of at least one month.

It is not claimed that the solid silicone rubber has a shelf life of at least six months.

It is not claimed that the solid silicone rubber has a shelf life of at least one year.

It is not claimed that a pot life of the heat curable tape is equal to a shelf life of the solid silicone rubber.

It is not claimed that a pot life of the heat curable tape is at least one month.

It is not claimed that a pot life of the heat curable tape is at least six months.

It is not claimed that a pot life of the heat curable tape is at least one year.

In some embodiments of the first aspect of the invention, the substrate layer includes a fiberglass layer.

In some embodiments of the first aspect of the invention, the substrate layer further includes a silicone coating layer, connected to the fiberglass layer.

It is not claimed that the silicone coating layer has a shore A hardness in the range of 75 to 80.

In some embodiments of the first aspect of the invention, the substrate layer has a thickness in the range of 110µm to 170 µm.

It is not claimed that the substrate layer has a thickness of 160µm.

In some embodiments of the first aspect of the invention, the solid silicone rubber layer has a thickness in the range of 20 µm to 120 µm.

In some embodiments of the first aspect of the invention, a ratio between a thickness of the solid silicone rubber layer and a thickness of the substrate layer is in the range of 0.10 to 0.75.

It is not claimed that the curable tape has a thickness in the range of 180µm to 270µm.

In some embodiments of the first aspect of the invention, a ratio between a thickness of the tape and a thickness of the belt is in the range of 0.15 to 11.15.

In some embodiments of the first aspect of the invention, a length of the heat curable tape is greater than a width of the flexible belt.

It is not claimed that a length of the heat curable tape is in the range of 1200mm to 1300mm.

It is not claimed that a width of the heat curable tape is in the range of 20mm to 30mm.

In some embodiments of the first aspect of the invention, a ratio between a width of the tape and a length of the belt is in the range of 0.01 to 0.03.

In some embodiments of the first aspect of the invention, the kit further includes a heater adapted to be disposed beneath the heat curable tape when the heat curable tape is applied to the first and second ends of the flexible belt, and adapted to provide heat sufficient for heat-curing the solid silicone rubber of the heat-curable tape thereby to heat-cure the heat curable tape to form the endless belt.

It is not claimed that the heater includes a heating surface having a width greater than a width of the heat-cured tape. In some embodiments of the first aspect of the invention, the heater is designed such that a greater heat density is provided at ends of the heating surface than at a center of the heating surface.

It is not claimed that the heater includes a plurality of heating elements, the heating elements being unevenly distributed across the heating surface, such that a greater heat density is provided at ends of the heating surface than at a center of the heating surface.

It is not claimed that the plurality of heating elements are printed on ceramic plates.

It is not claimed that the plurality of heating elements are printed on filaments.

It is not claimed that the plurality of heating elements are printed on mica strips.

It is not claimed that the plurality of heating elements are printed on silicon strips.

It is not claimed that the heater is adapted, during operation thereof, to provide a first operative temperature at the center of the heating surface, and to provide a second operative temperature at the ends of the heating surface.

It is not claimed that the first operative temperature is in the range of 140C to 180C.

It is not claimed that the second operative temperature is in the range of 180C to 220C.

It is not claimed that the heater is adapted, during operation thereof when the first and second ends of the flexible elongate belt are disposed over the heating surface, and the heat-curable tape is disposed over the first and second ends, to provide a uniform temperature across the heat-curable tape.

It is not claimed that the uniform temperature is in the range of 130 to 180 C.

It is not claimed that during operation of the heater, when the first and second ends of the flexible elongate belt are disposed over the heating surface, and the heat-curable tape is disposed over the first and second ends, the heater is adapted to provide the first and the second operative temperatures for a duration of at most 1 minute, thereby to heat-cure the solid silicone rubber of the heat-curable tape.

It is not claimed that during operation of the heater, when the first and second ends of the flexible elongate belt are disposed over the heating surface, and the heat-curable tape is disposed over the first and second ends, the heater is adapted to provide the first and the second operative temperatures for a duration of at most 3 minutes, thereby to heat-cure the solid silicone rubber of the heat-curable tape.

It is not claimed that during operation of the heater, when the first and second ends of the flexible elongate belt are disposed over the heating surface, and the heat-curable tape is disposed over the first and second ends, the heater is adapted to provide the first and the second operative temperatures for a duration of at most 5 minutes, thereby to heat-cure the solid silicone rubber of the heat-curable tape.

It is not claimed that during operation of the heater, when the first and second ends of the flexible elongate belt are disposed over the heating surface, and the heat-curable tape is disposed over the first and second ends, the heater is adapted to provide the first and the second operative temperatures for a duration of at most 10 minutes, thereby to heat-cure the solid silicone rubber of the heat-curable tape.

It is not claimed that during operation of the heater, when the first and second ends of the flexible elongate belt are disposed over the heating surface, and the heat-curable tape is disposed over the first and second ends, the heater is adapted to provide the first and the second operative temperatures for a duration of at most 15 minutes, thereby to heat-cure the solid silicone rubber of the heat-curable tape.

It is not claimed that during operation of the heater, when the first and second ends of the flexible elongate belt are disposed over the heating surface, and the heat-curable tape is disposed over the first and second ends, the heater is adapted to provide the first and the second operative temperatures for a duration of at most 20 minutes, thereby to heat-cure the solid silicone rubber of the heat-curable tape.

It is not claimed that the heater is adapted to reach the first and second operative temperatures within a duration of at most 1 minute.

It is not claimed that the heater is adapted to reach the first and second operative temperatures within a duration of at most 3 minutes.

It is not claimed that the heater is adapted to reach the first and second operative temperatures within a duration of at most 5 minutes.

It is not claimed that the heater is adapted to reach the first and second operative temperatures within a duration of at most 10 minutes.

It is not claimed that the heater is formed of a metal selected from the group consisting of aluminum, copper, and brass.

It is not claimed that the heating surface has a heat conductivity in the range of 2.35 W/cmK to 40 W/cmK.

It is not claimed that the flexible elongate belt has a positioning arrangement removably attached to the first and second ends, the positioning arrangement adapted for positioning the first and second ends of the belt over the heating surface of the heater during heat-curing of the heat-curable tape.

It is not claimed that the positioning arrangement includes at least one magnetic element, and the heater includes at least one corresponding magnetic element adapted to magnetically attract the at least one magnetic element of the positioning arrangement during the heat-curing of the heat-curable tape.

It is not claimed that the at least one magnetic element includes a magnetic metal strip removably attached to each of the first and second ends of the flexible elongate belt.

It is not claimed that the at least one corresponding magnetic element includes at least one samarium cobalt magnet.

It is not claimed that the positioning arrangement includes a double sided adhesive.

It is not claimed that the positioning arrangement includes at least one fixing pin, and the heater includes at least one corresponding fixing bore, adapted to receive the at least one fixing pin during the heat-curing of the heat curable tape.

It is not claimed that the positioning arrangement includes at least one elongate ridge, and the heating surface includes at least one corresponding elongate groove, adapted to receive and engage the at least one elongate ridge during the heat-curing of the heat-curable tape.

It is not claimed that the positioning arrangement includes an electrostatic force generating arrangement.

It is not claimed that the positioning arrangement is formed of a non-insulating material. In some embodiments of the first aspect of the invention, the positioning arrangement has a heat conductivity of at least 0.8 W/cmK.

It is not claimed that the flexible belt includes a rebate at each of the first and second ends, wherein when the rebates are positioned adjacent one another a channel is formed, the channel sized and adapted to accommodate the heat curable tape therein.

It is not claimed that each of the rebates has a depth in the range of 140µm to 250µm.

It is not claimed that a strength of the heat curable tape, following curing thereof, is directly proportional to a heat quantity applied to the solid silicone rubber layer during curing of the tape.

It is not claimed that following heat-curing of the solid silicone rubber layer of the tape, a 20mm segment of the endless belt, including the heat-cured tape, is capable of resisting a load of at least 200N, at room temperature.

It is not claimed that following heat-curing of the solid silicone rubber layer of the tape, a 20mm segment of the endless belt, including the heat-cured tape, is capable of resisting a load of at least 220N, at room temperature.

It is not claimed that following heat-curing of the solid silicone rubber layer of the tape, a 20mm segment of the endless belt, including the heat-cured tape, is capable of resisting a load of at least 250N, at room temperature.

It is not claimed that following heat-curing of the solid silicone rubber layer of the tape, a 20mm segment of the endless belt, including the heat-cured tape, is incapable of resisting a load greater than 350N at room temperature.

It is not claimed that following heat-curing of the solid silicone rubber layer of the tape, a 20mm segment of the endless belt, including the heat-cured tape, is incapable of resisting a load greater than 380N at room temperature.

It is not claimed that following heat-curing of the solid silicone rubber layer of the tape, a 20mm segment of the endless belt, including the heat-cured tape, is incapable of resisting a load greater than 400N, at room temperature.

It is not claimed that following heat-curing of the solid silicone rubber layer of the tape, a 20mm segment of the endless belt, including the heat-cured tape, is capable of resisting a load in the range of 250N-350N, at room temperature.

It is not claimed that following heat-curing of the solid silicone rubber layer of the tape, a 20mm segment of the endless belt, including the heat-cured tape, is capable of resisting a load in the range of 220N-380N, at room temperature.

It is not claimed that following heat-curing of the solid silicone rubber layer of the tape, a 20mm segment of the endless belt, including the heat-cured tape, is capable of resisting a load in the range of 200N-400N, at room temperature.

In some embodiments of the first aspect of the invention, (i) the flexible belt includes a plurality of lateral formations along at least a portion of each lateral edge, and (ii) at least one of the lateral formations on each lateral edge at each one of the free ends of the flexible belt includes an anchoring structure adapted for attachment to an attachment mechanism, which attachment mechanism is adapted for attaching ones of the laterally extending formations at opposing free ends of each lateral edge of the flexible belt.

In some embodiments of the first aspect of the invention, the kit additionally includes at least two attachment mechanisms each adapted to engage at least two anchoring structures at opposing free ends of each lateral edge of the belt and to attach the laterally extending formations associated with the anchoring structures engaged by the attachment mechanism thereby to attach the opposing free ends of each lateral edge of the flexible belt.

### BRIEF DESCRIPTION OF THE DRAWINGS

Some embodiments of the invention are described herein with reference to the accompanying figures. The description, together with the figures, makes apparent to a person having ordinary skill in the art how some embodiments of the invention may be practiced. The figures are for the purpose of illustrative discussion and no attempt is made to show structural details of an embodiment in more detail than is necessary for a fundamental understanding of the invention. For the sake of clarity, some objects depicted in the figures are not to scale.

In the Figures:
Figure 1 is a schematic illustration of a printing system;
Figure 2 is a schematic, cross section illustration of a heat-curable tape usable to connect first and second ends of an elongate belt to form an endless belt of an intermediate transfer member, in accordance with an embodiment of the present invention;
Figure 3 is a schematic cross-section illustration of first and second ends of the elongate belt and the heat-curable tape positioned for curing of the heat-curable tape;
Figure 4 shows a leading end of an elongate belt that is threaded through a printing system to form an endless belt of an intermediate transfer member;
Figure 5 is a perspective view of one end of a support system of an intermediate transfer member of a printing system, the support system including a heater for heat-curing a seam of the intermediate transfer member, in accordance with an embodiment of the present invention;
Figure 6 is a schematic, top view planar illustration of one embodiment of a heater forming part of the support system of Figure 5, the heater used for curing a seam of an endless belt of the printing system;
Figure 7 is a schematic cross-sectional illustration of the heater of Figure 6, during operation thereof for curing the seam of Figures 2 and 3;
Figure 8A is a schematic plan view showing two ends of an intermediate transfer member with lateral formations, with a detail view of several lateral formations, in accordance with an embodiment of the present invention;
Figure 8B is a schematic elevation view of a crimping pin for securing the respective positions of the ends of the intermediate transfer member, in accordance with an embodiment of the present invention;
Figure 8C is a schematic plan view of the several lateral formations of Fig. 8A, secured by means of the crimping pin of Figure 8B, in accordance with an embodiment of the present invention; and
Figures 9 and 10 show respective flow charts of methods for installing an intermediate transfer member, in accordance with embodiments of the present invention.

### DESCRIPTION OF SOME EMBODIMENTS OF THE INVENTION

The invention, in some embodiments, relates to a kit for forming an intermediate transfer member to be installed in a printing system, the kit including an elongate belt and a heat-curable tape.

The invention, in some embodiments, relates to a kit for installing an intermediate transfer member in a printing system, the kit including a heat-curable tape and an adhesive.

The present invention is intended to solve problems arising when using prior art methods of connecting the free ends of the flexible elongate belt.

In many currently used methods, the free ends of the flexible elongate belt are connected to each other by a seam element that is condensation cured. In other words, the seam element applied onto the ends of the belt includes a polymer that hardens, or polymerizes, in a humid environment, thereby connecting the ends of the belt to form an endless belt. Due to the sensitivity of the seam element to humidity, and due to the humidity always present in the air, one can only use the seam element within 15 minutes from exposure of the polymer to the environment. Additionally, following condensation curing of the polymer in the seam element, one must wait at least an hour for the seam to have its initial strength and 24 hours are required for the seam to reach its full strength. As such, installation of an intermediate transfer member causes cessation of work of the system for at least an hour, and in some cases as long as 24 hours.

There exist some factory-formed tapes usable as seam elements, which do not require the user to apply a liquid polymer onto a substrate. Such tapes are heat-curable, but typically include epoxy, which is unsuitable for use with a silicone belt, such as the belt from which an ITM is typically formed. Other prior art tapes include a pressure sensitive adhesive, in which the curing temperature of the silicone or polymer included in the tape is not fixed, and is dependent on the pressure conditions in which the heat curing takes place.

The present invention solves the deficiencies of the prior art by providing a heat-curable adhesive tape which is not sensitive to the humidity of the environment or to the pressure during curing, and has a long shelf life and pot life. An ITM having ends connected with the tape of the present invention is strong enough to operate for at least two weeks, at a normal printing speed, without failing.

The principles, uses and implementations of the teachings herein may be better understood with reference to the accompanying description and figures. Upon perusal of the description and figures present herein, one skilled in the art is able to implement the invention without undue effort or experimentation. In the figures, like reference numerals refer to like parts throughout.

Before explaining at least one embodiment in detail, it is to be understood that the invention is not necessarily limited in its application to the details of construction and the arrangement of the components and/or methods set forth herein. The invention is capable of other embodiments or of being practiced or carried out in various ways. The phraseology and terminology employed herein are for descriptive purposes and should not be regarded as limiting.

Additional objects, features and advantages of the invention will be set forth in the detailed description which follows, and in part will be readily apparent to those skilled in the art from the description or recognized by practicing the invention as described in the written description and claims hereof, as well as the appended drawings. Various features and sub-combinations of embodiments of the invention may be employed without reference to other features and sub-combinations.

It is to be understood that both the foregoing general description and the following detailed description, including the materials, methods and examples, are merely exemplary of the invention, and are intended to provide an overview or framework to understanding the nature and character of the invention as it is claimed, and are not intended to be necessarily limiting.

In the context of the description and claims herein, the terms "seam", "belt seam", and "blanket seam" may be used interchangeably and relate to a material or substance used to connect first and second free ends of an elongate belt to one another, thereby to form a continuous loop, or endless belt, usable as an ITM.

In the context of the description and claims herein, the terms "blanket" and "belt" are used interchangeably and relate to a surface suitable for use as a printing surface in a printing system, such as for use as an ITM. The blanket may be an "endless blanket", formed by connecting first and second ends of an elongate blanket to form a continuous loop.

In the context of the description and claims herein, the term "tape" relates to a stretch of a material or substance usable to connect two elements to one another.

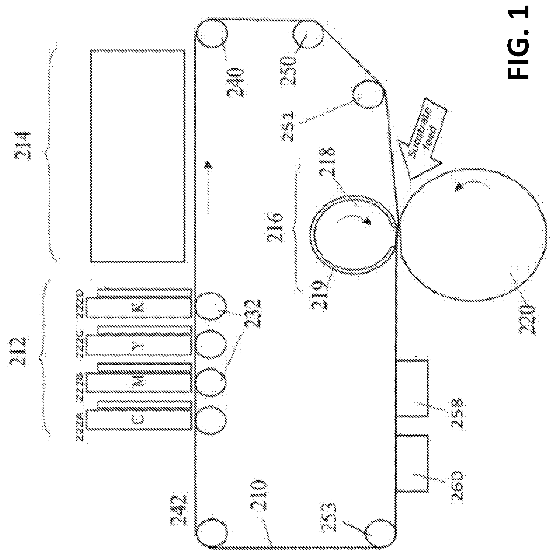

In the context of the description and claims herein, the term "heat-curable" relates to a substance or material that is cured or polymerized at a substantially fixed and elevated temperature, which is significantly higher than an ambient temperature. The curing is substantially independent of heat or humidity conditions in the environment at the time of curing. Reference is now made to Figure 1, which is a schematic illustration of a printing system **10** that implements an indirect printing process.

The system **10** comprises an intermediate transfer member (ITM) **210** comprising a flexible endless belt mounted over a plurality of guide rollers **232, 240, 250, 251, 253,** and **242.**

In the specification herein, the ITM may be referred to also as an elongate belt having ends connected by a seam, as an endless belt, or as a continuous loop belt.

In some embodiments, the belt of ITM **210** has a length of up to 20 meters, and typically, a length within a range of 5-20, 5-15, 5-12, or 7-12 meters. In some embodiments, the belt of ITM **210** has a width of up to 2.0 meters, and typically, within a range of 0.3-2.0, 0.75-2.0, 0.75-1.5, or 0.75-1.25 meters.

In some embodiments, the belt of ITM **210** has a thickness of up to 3000µm, and typically, within a range of 200-3000, 200-1500, 300-1000, 300-800, 300-700, 100-3000, 50-3000, or 100-600µm.

In the example of FIG. 1, the ITM **210** (i.e. belt thereof) moves in the clockwise direction. The direction of belt movement defines upstream and downstream directions. Rollers **242, 240** are respectively positioned upstream and downstream of an image forming station **212** - thus, roller **242** may be referred to as a "upstream roller" while roller **240** may be referred to as a "downstream roller".

The system of Fig. 1 further includes:
(a) an image forming station **212** (e.g. comprising print bars **222A-222D,** where each print bar comprises ink jet head(s)) configured to form ink images (not shown) upon a surface of the ITM **210** (e.g. by droplet deposition upon a dried treatment film).
(b) a drying station **214** for drying the ink images.
(c) an impression station **216** where the ink images are transferred from the surface of the ITM **210** to sheet or web substrate. In the particular non-limiting example of Fig. 1, impression station **216** comprises an impression cylinder **220** and a blanket cylinder **218** that carries a compressible blanket or belt **219.** In some embodiments, a heater **231** may be provided shortly prior to the nip between the two cylinders **218** and **220** of the image transfer station to assist in rendering the ink film tacky, so as to facilitate transfer to the substrate (e.g. sheet substrate or web substrate). The substrate feed is illustrated schematically.
(d) a cleaning station **258** where the surface of the ITM 210 is cleaned.
(e) a treatment station **260** (i.e. in Fig. 1 illustrated schematically as a block) where a layer (e.g. of uniform thickness) of liquid treatment formulation (e.g. aqueous treatment formulation) on the ITM surface can be formed.

The skilled artisan will appreciate that not every component illustrated in Fig. 1 is required.

The primary purpose of the belt is to receive an ink image from the inkjet heads and to transfer that image dried but undisturbed to the substrate at the impression stations **216.** Though not illustrated in the Figures, the belt forming the ITM may have multiple layers to impart desired properties to the transfer member. Specifically, the belt may include a release layer, which is an outer layer for receiving the ink image and having suitable release properties.

In some printing systems, the intermediate transfer member may be optionally treated at the treatment station **260** to further increase the interaction of the compatible ink with the ITM, or further facilitate the release of the dried ink image to the substrate, or provide for a desired printing effect.

Though not shown in the figures, the substrate may be a continuous web, in which case the input and output stacks are replaced by a supply roller and a delivery roller. The substrate transport system needs to be adapted accordingly, for instance by using guide rollers and dancers taking slacks of web to properly align it with the impression station.

In the non-limiting example of Fig.1 the printing system cannot achieve duplex printing but it is possible to provide a perfecting system to reverse substrate sheets and pass them a second time through the same nip. As a further alternative, the printing system may comprise a second impression station for transferring an ink image to opposite sides of the substrates.

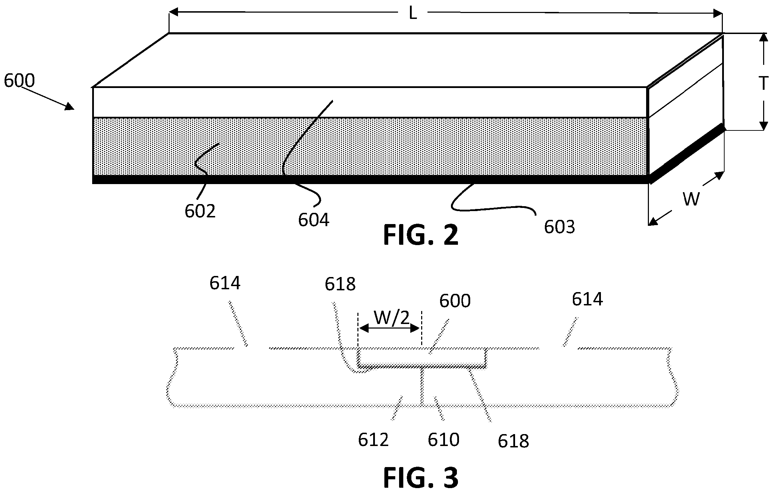

In embodiments of the present invention, the belt **210** is seamed, in that the means used to secure the free ends to one another forms a discontinuity in the transfer member. In particular, as explained in further detail hereinbelow, the ITM is formed of an initially flat elongate flexible belt having first and second free ends (before its installation in the printing system), which free ends are permanently fastened to one another using a seam, when installed within the printing system, to form a continuous loop (e.g. endless belt), as described in further detail hereinbelow with respect to Figures 2 and 3.

In order to assure a smooth movement and avoid a sudden change in the tension of the belt as the seam passes over the guide rollers (Fig. 1), it is desirable to make an area of the endless belt including the seam, as nearly as possible, of the same thickness as the remainder of the belt. Figure 3, described in further detail hereinbelow, illustrates an arrangement of the flexible belt and heat-curable tape useful for ensuring that a difference in the thickness of the belt throughout the length thereof, including at an area of the seam, is not greater than 200µm, or is in the range of 0-200µm. Preferably, the thickness of the belt is substantially uniform throughout the belt, also in areas including the seam.

It is also desirable to avoid discontinuity of chemical and/or mechanical properties of the belt at the seam. Preferably, no ink image or part thereof is deposited on the seam, but only as close as feasible to such discontinuity on an area of the belt having substantially uniform properties / characteristics. Desirably, the seam passes impression station at a time the impression roller is not engaged with the corresponding pressure roller.

Reference is now made to Figure 2, which is a schematic, cross section illustration of a heat-curable tape **600** usable as a seam to connect first and second free ends of an elongate belt to form the endless belt loop of intermediate transfer member **210** of Figure 1, in accordance with an embodiment of the present invention.

As seen in Figure 2, heat-curable tape **600** includes a substrate layer **602** and a solid silicone rubber layer **604** disposed on the substrate layer **602.**

In some embodiments, the substrate layer **602** includes a fiberglass layer. In some embodiments, the substrate layer further includes a silicone coating layer **603,** connected to the fiberglass layer, which may have a shore A hardness in the range of 75 to 80. In some embodiments, the substrate layer **602** has a thickness in the range of 110µm to 170 µm.

For example, the substrate layer **602** may be a 7101 Black tape, commercially available from Taconic^{®} of Petersburgh, NY, USA, which includes a fiberglass layer coated with black silicone, having a total thickness of 160µm. However, any other suitable substrate layer may be used.

The solid silicone rubber layer **604** is connected to the substrate layer **602** by any suitable means, which may include an adhesive layer. In embodiments in which the substrate layer **602** includes a silicone coating layer **603,** the solid silicone rubber layer **604** is connected to the surface of substrate layer **602** distal from silicone coating layer **603.**

In some embodiments, the solid silicone rubber layer **604** includes a thermosetting polymer selected from the group of platinum catalyzed addition curing solid silicone thermosetting rubbers. In some embodiments, the solid silicone rubber of the solid silicone rubber layer **604** has a density in the range of 1.1 to 1.2 g/cm^3, or, in some embodiments, a density of 1.15 g/cm^3. In some embodiments, the solid silicone rubber layer **604** has a thickness in the range of 20µm to 120µm. In some embodiments, the solid silicone rubber layer **604** has a shore A hardness in the range of 55 to 65.

In some embodiments, the solid silicone rubber of the solid silicone rubber layer **604** has a shelf life of at least one month, at least six months, at least one year.

In some embodiments, the solid silicone rubber layer **604** is additionally or alternatively characterized in that the greater the heat quantity applied to it, the greater the strength of the heat-curable tape 600, when cured.

For example, the solid silicone rubber layer **604** may be formed of Elastosil^{®} R plus 4066/60, commercially available from Wacker Chemie of Munich, Germany, which has been flattened to have a suitable thickness. However, any other suitable solid silicone rubber layer or addition curing polymer may be used.

An exemplary method for flattening solid silicone rubber to form the solid silicone rubber layer **604,** and for connection of the solid silicone rubber layer **604** to the substrate layer **602** to form the heat-curable tape **600** is described hereinbelow with respect to Example 1.

In some embodiments, the heat-curable tape **600** has a thickness, indicated in Figure 2 by 'T', in the range of 180µm to 270µm. In some embodiments, a ratio between the thickness of the solid silicone rubber layer **604** and the thickness of the substrate layer **602** is in the range of 0.10 to 0.75.

In some embodiments, the length of the heat curable tape **600** is greater than the width of the flexible belt used to form the ITM **210** (Figure 1).

In some embodiments, the length of heat-curable tape **600,** indicated in Figure 2 by 'L', is in the range of 1200mm to 1300mm.

In some embodiments, the width of heat-curable tape **600,** indicated in Figure 2 by 'W', is in the range of 20mm to 30mm.

In some embodiments, a ratio between the width of heat-curable tape **600** and a length of the flexible belt used to form ITM **210** (Figure 1) is 0.01 to 0.03.

In some embodiments, a pot life of the heat-curable tape **600** is equal to a shelf life of the solid silicone rubber of layer **604.** In the context of the present application, the term "pot life" of an object, relates to the duration of time in which the object is usable, and is not harmed or changed by the environment, in normal storage conditions. In the present application, the pot life of the heat-curable tape **600** relates to the amount of time that the tape can be used without the solid silicone rubber layer **604** becoming non-tacky or "self-curing" in the environment. In some embodiments, the pot life of heat-curable tape **600** is at least one month, at least six months, or at least one year. In some embodiments, this pot-life of heat-curable tape **600** is maintained when the tape is stored in an environment having a humidity in the range of 10% to 70%.

As described hereinbelow, the heat-curable tape **600** is designed to be applied to free ends of a flexible belt so as to form an endless belt. The solid silicone rubber layer **604** is heat-cured onto the free ends of the belt, so as to form a seam connecting the free ends **610** and **612** (Figure 3) of the belt and converting the flexible belt into an endless belt usable as ITM **210** (Figure 1).

In some embodiments, the tape **600** is characterized in that, following heat-curing of solid silicone rubber layer **604,** the tape has a tensile strength of at least 8 MPa.

In some embodiments, following heat-curing of solid silicone rubber layer **604,** tape **600** has a shore A hardness of at least 45. In some embodiments, following heat-curing of solid silicone rubber layer **604,** tape **600** has a shore A hardness of at most 80. following heat-curing of solid silicone rubber layer **604,** tape **600** has a shore A hardness of in the range of 45 to 80.

As shown in the Examples section hereinbelow, the heat-curable tape **600** is further characterized in that, following heat-curing of solid silicone rubber layer **604** onto the flexible belt, a 20mm segment of tape **600** is capable of resisting a load of at least 200N, at least 220N, or at least 250N, at room temperature. Under the same conditions, a 20mm segment of tape **600** is incapable of resisting a load greater than 350N, greater than 380N, or greater than 400N, at room temperature. As such, following heat-curing of solid silicone rubber layer **604** onto the flexible belt, a 20mm segment of tape **600** is capable of resisting a load within the range of 250N-350N, 220N-380N, or 200N-400N, at room temperature.

In some embodiments, due to the characteristics of solid silicone rubber layer **604,** the greater the heat quantity applied to tape **600** for curing of the solid silicone rubber layer **604,** the greater the strength of the heat-curable tape **600,** when cured.

Reference is now made to Figure 3, which shows a schematic cross-section illustration of first and second ends **610** and **612** of the elongate belt used to form ITM **210** and the heat-curable tape **600** positioned over the free ends of the belt for curing of the tape.

In prior art methods, when the free ends of the belt are joined, they are arranged to abut one another, a seam may be placed over the two ends of the flexible belt, to connect the two ends. However, this method results in an area of the belt, at which the seam is applied, having an increased thickness relative to the thickness of the rest of the belt, which may create a sudden change in the tension as this thicker area passes over the guiding rollers (Figure 1) or through an impression station **216** (Figure 1).

In accordance with the present invention, as illustrated in Figure 3, application of the seam does not increase the thickness of the ITM at the area of the seam. In this embodiment, the free ends **610** and **612** of an elongate flexible belt **614** which is to be formed into the ITM **210** (Figure 1), are ground down to form rebates **618** for receiving the heat-curable tape **600.** As seen in Figure 3, the tape **600** has a width W, and each of the rebates **618** is half as wide as the tape **600** and has a width W/2, such that when free ends **610** and **612** abut one another, rebates **618** form a channel sufficiently wide to accommodate tape **600.**

The tape **600** is placed in the channel formed from rebates **618** with solid silicone rubber layer **604** facing the free ends **610** and **612,** and with the substrate layer **602** being substantially flush with the upper surface of belt **614.** In some embodiments, in which substrate layer **602** includes a silicone coating layer **603,** the silicone coating layer is flush with the upper surface of belt **614.** In some embodiments, an adhesive layer is applied onto rebates **618,** and the tape **600** is applied onto the adhesive layer.

In some embodiments, the tape **600** is applied onto the rebates **618,** and an adhesive layer is applied above the tape **600** and around edges thereof, so as to seal any portions of the rebates **618** not filled by the tape **600.** In some embodiments, the adhesive is not applied to the release layer of belt **614.** For example, the adhesive layer may comprise 3730 A&B adhesive, commercially available from Dow Corning of Midland, Michigan, USA.

In some embodiments, the depth of the rebates does not exceed half the thickness of the belt **614.** In some embodiments, the depth of the rebates is at least 25µm or at least 50µm greater than the thickness of heat-curable tape **600,** so as to accommodate the tape **600** as well as the adhesive layer while a surface of tape **600** remains substantially flush with the upper surface of belt **614.** In embodiments in which no adhesive layer is included, the depth of the rebates **618** may be substantially equal to the thickness of tape **600.** In some embodiments, each rebate **618** has a depth in the range of 140µm to 250µm.

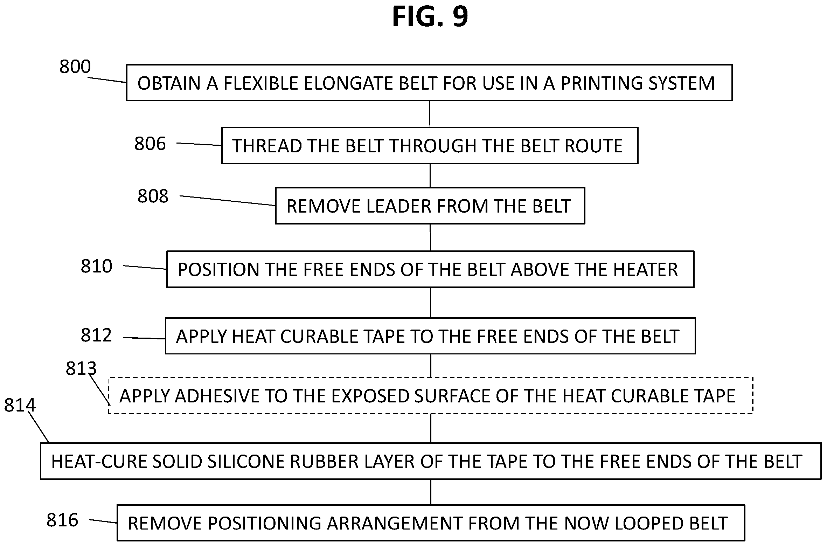

As described hereinbelow with respect to Figure 9, the tape **600** is heat-cured onto the first and second ends **610** and **612** of belt **614.** In the context of the disclosure and claims herein, an area of tape **600** or an area including tape **600** is defined as 200mm to 250mm of the belt which include the tape **600.**

In some embodiments, the flexibility of the belt and of the tape or an area of the belt surrounding the tape may be measured by forming a loop from a rectangular strip of the area for which flexibility is being measured. The height of the loop is then measured, and is indicative of the flexibility of the material, such that the lower the height of the measured loop, the greater the flexibility.

In order to test the flexibility of a belt **614** according to the disclosure herein and of an area of the belt including tape **600,** the test described above was applied a rectangular strip of the belt and/or tape area of the belt, having a width of 15mm and a length of 150mm.

In some embodiments, in an area of tape **600** or an area surrounding the tape, the height of the loop measuring the flexibility of the belt **614** is 2.2cm while in other areas of the tape, not including the seam, the height of the loop measuring the flexibility of the tape is 2.0cm. In some embodiments, a ratio between the flexibility of the belt in the area including tape **600** and the flexibility of the belt in the area not including the tape, as indicated by a ratio in the heights of the loops measured for these areas, is 0.9.

One method of measuring the stretchiness of the belt and/or of the tape is described hereinbelow with reference to Example 4. In some embodiments, in which stretchiness is measured as described herein with respect to Example 4 on a strip having a length in the range of 100mm-200mm and a width of 20mm, in an area of tape **600** or an area surrounding the tape, the stretchiness of the belt **614** is in the range of 27N/mm to 41N/mm, while in other areas of the tape, not including the seam, the stretchiness of the tape is 24N/mm to 37N/mm. In some embodiments, a ratio between the stretchiness of the belt in the area including tape **600** and the stretchiness of the belt in the area not including the tape is 0.85-0.90.

In some embodiments, a variance in the thickness of belt **614,** throughout the length of the belt and including the area of the belt including tape **600,** is at most 200µm.

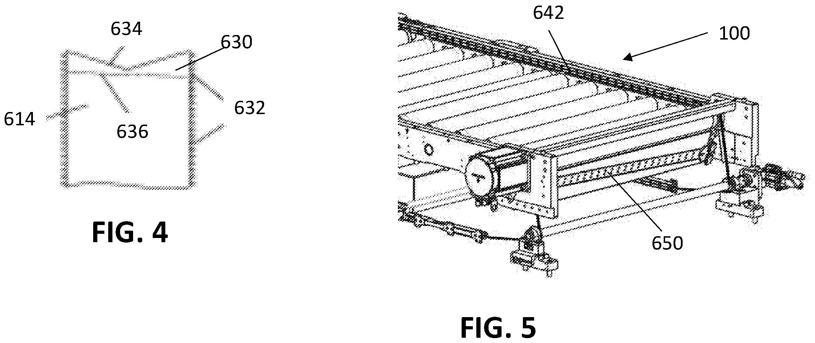

Reference is now made to Figure 4, which shows a leader **630** of flexible elongate belt **614,** as well as lateral formations **632** formed on the sides of belt **614,** the leader **630** and lateral formations **632** used for threading belt **614** through a printing system, such as printing system **10** (Figure 1) to form an endless belt of an intermediate transfer member, such as ITM **210** (Figure 1).

As seen in Figure 4, both belt **614** and leader **630** include lateral formations **632,** formed on longitudinal ends of the belt and the leader.

The lateral formations **632** may be spaced projections, such as the teeth of one half of a zip fastener sewn or otherwise attached to each side edge of the belt **614** and of the leader **630,** as shown in the embodiment of Figure 4. Such lateral formations need not be regularly spaced.

Alternatively, the formations may be a continuous flexible bead of greater thickness than the belt **614.** The lateral formations **632** may be directly attached to the edges of the belt **614** or may be attached through an intermediate strip that can optionally provide suitable elasticity to engage the formations in lateral channels of a guiding track, described and illustrated hereinbelow with reference to Figure 5, while maintaining the belt **614** flat, in particular at the image forming station **212** (Figure 1) of the printing system.

The lateral formations **632** may be made of any material able to sustain the operating conditions of the printing system, including the rapid motion of the ITM. Suitable materials can resist elevated temperatures in the range of about 50°C to 250°C. Advantageously, such materials are also friction resistant and do not yield debris of size and/or amount that would negatively affect the movement of the belt during its operative lifespan. For example, the lateral formations **632** can be made of polyamide reinforced with molybdenum disulfide.

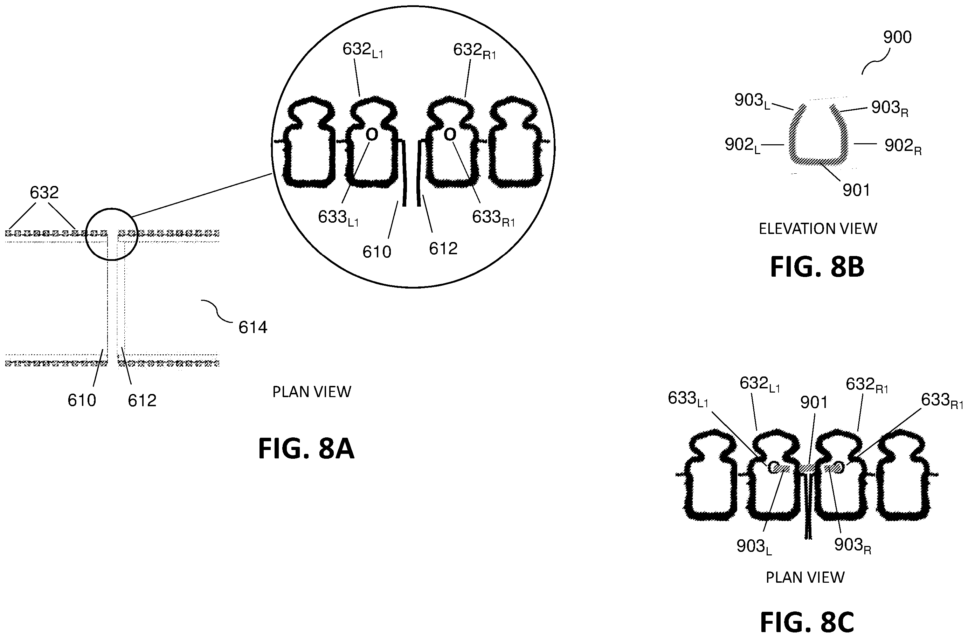

The leader **630** of the flexible belt **614** is advantageously shaped to facilitate guiding of the belt through the lateral channels of the guiding track and over the rollers during installation, for example as described hereinbelow with reference to Figures 5 and 8.

As illustrated in Figure 4, the leader **630** is formed on one of ends **610** and **612** of the elongate belt forming ITM **210** (Fig. 1) which is the leading end when threading the belt through the belt route of the printing system. The leader **630** is made of a flexible material so that they may follow the belt route of the printing system, but may be made of a stiffer material than that of belt **614,** so as to have less tendency to sag. The leader **630** includes a V-shaped cut-out **634** formed in the leading edge of leader **630,** which cutouts help prevent sagging of the belt while it is being threaded through the belt route of the printing system.

The leader **630** may be separable from one of the ends **610** and **612** of belt **614** which forms the leading end while threading the belt. In some embodiments, the leader **630** is separably connected to one of the ends **610** and **612** by suitable links or snaps, which facilitate easy removal of the leader from the leading end of the belt once the belt is threaded through the belt route. In some embodiments, when connected to the belt **614,** the leader **630** is disposed in, or above, one of rebates **618,** so as to protect the rebate **618** from damage which may be caused by threading of the belt. In other embodiments, the leader **630** is connected to one of ends **610** and **612** adjacent rebate **618.** In some such embodiments, the leader **630** may include corresponding rebates, and may be separable from one of ends **610** and **612** along a separation line, which is typically inclined.

As described in further detail hereinbelow, once the flexible elongate belt **614** has been pulled around the belt route of the printing system, and the leader **630** has come round to the end of the belt support system (Figure 5), the leader **630** is removed and the opposite ends of the belt **614** are joined to one another by a seam, which may, as shown in Figure 4, extend along an inclined line **636.**

Reference is now made to Figure 5, which is a perspective view of one end of a belt support system **100** of an intermediate transfer member of a printing system.

The belt support system **100** further comprises a continuous lateral track defining a guiding channel **642** that can engage lateral formations **632** on the side edges of the belt, as illustrated in Figure 4, to maintain the belt taut in its width ways direction during threading and use thereof. The guiding channel **642** may have any cross-section suitable to receive and retain the belt lateral formations **632** and maintain the belt taut.

Such lateral formations and corresponding guide channels are typically not necessary when the intermediate transfer member is mounted on a rigid support.

Initial guiding of the belt into position may be done for instance by securing a leader **630** (Fig. 4) attached to the leading one of ends **610** and **612** (Fig. 3) of the belt to a chain which can manually or automatically be moved to thread the belt through the belt route and install the belt. For example, an end of leader **630** of belt **614** (Figure 4) can be releasably attached to a cable residing within each guiding channel **642.** Advancing the cable(s) advances the belt along a portion of the belt route defined by the guiding channel. As discussed hereinabove with reference to Figure 4, the leader **630** of belt **614** in the area ultimately forming the seam can have lower flexibility than in the areas other than the seam. This local "rigidity" may ease the insertion of the lateral formations **632** of the belt **614** into their respective channels.

Further details on exemplary methods for threading the belt lateral formations into the guiding channels are disclosed in PCT Publication No. WO 2016/166690.

The belt support system **100** further includes a heater for heat-curing the seam of the intermediate transfer member, in accordance with an embodiment of the present invention.

In some embodiments, such as those described hereinbelow with reference to Figure 5, the heater **650** is adapted to have the free ends of the belt, as well as a seam tape, placed thereupon while the heater is at room temperature, and to heat up so as to apply heat to the seam tape and to heat-cure it to the free ends of the belt, thereby to form the closed loop of the ITM.

As seen in Figure 5, the heater **650** is disposed in belt system **100** adjacent one of the rollers **240 or 242** (Figure 1), such that when threading the elongate flexible belt, such as belt **614,** through the belt route, the belt is threaded over heater **650.** In some embodiments, such as that illustrated in Figure 5, the heater **650** is disposed on a side of the belt system **100,** substantially perpendicular to an upper surface **652** of a frame **654** of the belt system **100.**

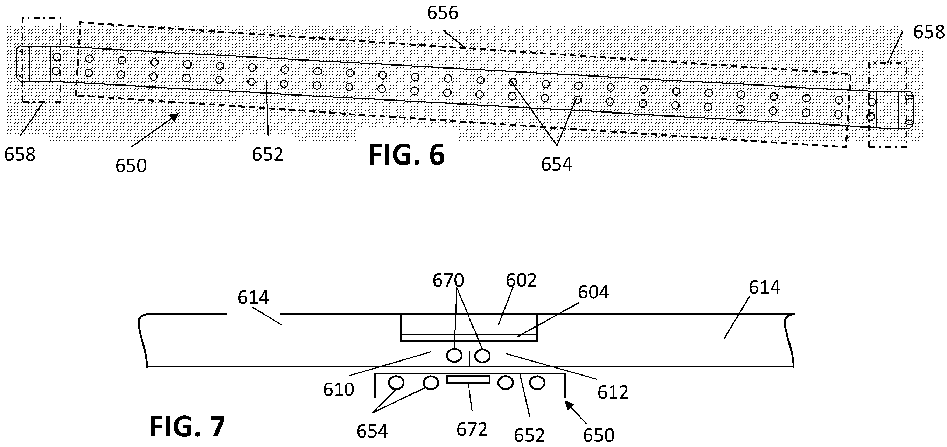

Reference is now additionally made to Figure 6, which is a schematic, top view planar illustration of one embodiment of heater **650,** and to Figure 7, which is a schematic cross-sectional illustration of the heater **650,** during operation thereof for heat-curing heat-curable tape **600** (Figure 2) onto free ends **610** and **612** of the elongate flexible belt **614** (Figure 3) to form a seam turning the belt **614** into the endless loop of ITM **102** (Figure 1).

The heater **650** includes a heating surface **652,** which, in operation, is disposed beneath the free ends **610** and **612** of the elongate flexible belt **614.** In some embodiments, such as the embodiment illustrated in Figures 5 and 6, the heating surface **652** is in the shape of a parallelogram, such that the inclined line along which the free ends **610** and **612** abut one another, lies in the center of the heating surface **652.** The length of the heating surface **652** is typically equal to or greater than the width of the belt **614,** and the width of the heating plate **652** is sufficiently large so as to provide heat to the entire area of the seam between ends **610** and **612.** In the embodiment illustrated in Figure 7, in which the free ends **610** and **612** of the belt are connected by heat-curable tape **600,** the width of the heating plate **652** is equal to or greater than the width of the heat-curable tape **600.**

In some embodiments, the heater **650** or the heating surface **652** is formed of a metal selected from the group consisting of aluminum, copper, and brass. In some embodiments, the heating surface **652** has a heat conductivity in the range of 2.35W/cmK to 40W/cmK.

As seen clearly in Figure 6, the heater **650** includes a plurality of heating elements **654,** which, in some embodiments, are disposed beneath the heating surface **652.** In some embodiments, the heating elements **654** are printed on at least one of ceramic plates, filaments, mica strips, and silicon strips.

In some embodiments, the heating elements **654** are unevenly distributed across said heating surface **652,** so that a greater heat density may be provided at ends of the heating surface than at a center of the heating surface. This feature is particularly important in embodiments in which the flexible belt **614** includes lateral formations **632,** as described hereinabove with respect to Figure 4, since the belt tends to be thicker in the area of the lateral formations, and thus a greater heat density is required in order for the heat-curable tape **600,** to reach a suitable temperature for heat-curing thereof in those areas.

More specifically, the heater is adapted to provide a temperature of at least 130°C uniformly across the heat-curable tape **600,** both in central areas of the tape lying above portions of the belt **614** which only include the material of the belt, and in end areas of the tape which lie above the lateral formations **632,** which make the tape **600** more distant from the heating surface **652.**

More specifically, the heater **650** is adapted, during operation thereof, to provide a first operative temperature in the range of 140C to 180C in a central region of the heating surface **652,** indicated in Figure 6 by a dashed rectangle **656,** and to provide a second operative temperature in the range of 180C to 220C at ends of the heating surface **652,** indicated by dashed rectangles **658.** The heater **650** is adapted to provide such temperatures for a duration of at most one minute, at most 3 minutes, at most 5 minutes, at most 10 minutes, at most 15 minutes, or at most 20 minutes, thereby to heat-cure the tape **600.** The heater **650** is adapted to reach the operative temperatures within 1 minute of activation, within 2 minutes of activation, within 3 minutes of activation, within 5 minutes of activation, or within 10 minutes of activation.

In some embodiments, illustrated clearly in Figure 7, the flexible elongate belt **614** includes a positioning arrangement **670** removably attached to one or both of ends **610** and **612.** The positioning arrangement **670** is adapted for positioning free ends **610** and **612** in abutment over heating surface **652** during heat-curing of tape **600** to the free ends of the belt. In some embodiments, the heater **650** includes a corresponding positioning arrangement **672,** suitable for engaging the positioning arrangement **670** of the belt **614.**

The positioning arrangement **670,** and in some embodiments also the positioning arrangement **672,** must be formed of a non-insulating material, so as not to hinder or interfere with heat-curing of the tape **600.** In some embodiments, the positioning arrangement **670** and/or positioning arrangement **672** has a heat conductivity of at least 0.8 W/cmK.

In some embodiments, the positioning arrangement **670** of the belt includes one or more magnetic elements, such as magnetic strips removably attached to the free ends **610** and **612,** and positioning arrangement **672** includes at least one magnetic element. During heat-curing of the tape **600** to the belt **614,** the magnetic strips are magnetically attracted to the one or more magnets in the heater **650,** such that the free ends of the belt are fixed relative to the heater **650** during operation thereof. In some such embodiments, the magnets of positioning arrangement **672** include samarium cobalt magnets. In some embodiments, the magnetic strips may be removed from the ends **610** and **612** of the belt once these ends have been connected to one another and the belt forms an endless loop.

In some embodiments, positioning arrangement **670** includes a double-sided adhesive.

In some embodiments, positioning arrangement **670** includes at least one fixing pin, and positioning arrangement **672** includes at least one correspondingly placed fixing bore, adapted to receive the at least one fixing pin during said heat-curing of tape **600.**

In some embodiments, positioning arrangement **670** includes at least one elongate ridge, and positioning arrangement **672** includes at least one correspondingly placed elongate groove, adapted to receive the at least one elongate ridge during said heat-curing of tape **600.**

In some embodiments, positioning arrangement **670** includes an electrostatic force generating arrangement adapted to generate electrostatic force connecting the belt **614** to heater **650.**

After the tape **600** has been heat-cured to ends **610** and **612** of belt **614** to form an endless belt, a tension roller, such as roller **251** illustrated in Figure 1, is extended to maintain the endless loop, and the intermediate transfer member, under the desired longitudinal tension.

We now refer to Figures 8A, 8B and 8C. In Figure 8A, a belt **614** is shown as having two ends **610, 612** in proximity to each other in preparation for joining by a seam according to the various embodiments disclosed herein. The belt **614,** as explained earlier, is characterized by having a plurality of lateral formations **632** along each of its long sides, the lateral formations **632** serving a number of functions including, inter alia, applying lateral tension to the belt **614** when residing in or moving through lateral guides provided so as to mesh with the spaced lateral formations **632.**

In accordance with an embodiment of the invention, lateral formation parts **632** may include anchoring structures adapted for attachment to an attachment mechanism. For example, in the illustrated embodiment, the anchoring structures comprise crimping pin holes **633** adapted for insertion thereinto of the attachment mechanism, which may be, for example, crimping pins such as crimping pin **900** of Figure 8B. Use of such attachment means connected to the anchoring structures, for example insertion of a crimping pin into two crimping pin holes, creates an at-least-temporary securing of the two belt ends **610, 612** to each other in advance of - and during - the applying and /or curing of a heat-curable tape. In the detail insert of Figure 8A, lateral formations **632_{L1}** (the ultimate lateral formation on belt edge **610)** and **632_{R1}** (the ultimate lateral formation on belt edge **612)** have respective crimping pin holes **633_{L1}, 633_{R1}** therethrough.

Since Figure 8A is a plan view, it can be understood that the hole goes through the lateral formation in a direction orthogonal to the belt. Any lateral formation **632** can have a crimping pin hole, or any other anchoring structure for connection to the attachment mechanism, but in the specific non-limiting example illustrated here, only lateral formations closest to a respective end of a belt end have such crimping pin holes or anchoring structures. Crimping pin holes **633** are shown only in the lateral formations **632** of the 'top' lateral edge (i.e., 'top' when looking at the plan view drawing) of Figure 8A. The skilled practitioner will understand that although not shown, the corresponding lateral formations **632** on the 'bottom' edge of the drawing, i.e., on the second lateral edge of the belt **614,** also have crimping pin holes **633** in at least the first lateral formation closest to the end of each respective belt end **610, 612.**

In some embodiments, anchoring structures such as crimping pin holes **633** can be provided in the lateral formations before installation, i.e., by manufacturing at least some lateral formation parts with anchoring structures or crimping pin holes already present. This may be accomplished, for example, by molding the lateral formations in that fashion or by drilling through the lateral formations after molding. Alternatively, the anchoring structures or crimping pin holes can be added later, even after a belt has left the factory, or even at the time of installing a new or replacement belt in a printing system. For example, crimping pin holes may be formed in the lateral formations by drilling through the lateral formation part in situ while preparing to apply a curable tape for long-term attachment of the two belt ends to each other, as described herein. In some embodiments, a special tool or jig can be provided to facilitate such drilling.

A non-limiting example of an attachment mechanism, and specifically of a crimping pin **900** suitable for attaching lateral formations including crimping pin holes **633,** is shown schematically in Figure 8B. According to this example, a crimping pin **900** can include a base member **901** and two upright members **902_{L}, 902_{R}.** A crimping pin **900** can be made of any material of suitable strength and flexibility, and which is resistant to the heat curing process described above. For example, and not exhaustively, the material can include a metal or metal alloy, a polymer, or a polymer-coated or -covered metal or metal alloy. Each upright member **902** can have a respective end **903** that is partially bent away from vertical in a manner that facilitates crimping. In the context of the present application, "crimping" an end should be taken to mean bend the end over with sufficient force and precision so as to leave the end bent over to a horizontal or near-horizontal attitude.

A result of such a crimping is illustrated in Figure 8C. In the small gap between lateral formations **632_{L1}** and **632_{R1},** a corresponding portion of base **901** of the crimping pin **900** can be seen - in this example the crimping pin has been inserted from underneath the lateral formations and up through the crimping pin holes **633_{L1}, 633_{R1}.** The bent-over or crimped-over edges **903L, 903R** of upright members **902L, 902R** can be seen as extending upward from the respective crimping pin holes **633** and, after bending or crimping, lying across a part of the upper surface of respective lateral formations **632.** The gap between the two lateral formations **632_{L1}** and **632_{R1}** is not shown to scale and in some embodiments the two lateral formations **632_{L1}** and **632_{R1}** can be touching or nearly touching after crimping.

It will be appreciated that the crimping pins and crimping pin holes described herein with respect to lateral formations **632** of belt **614** may be incorporated in any suitable lateral formations and/or belts.

Though the illustrated embodiments relate to anchoring structures in the form of crimping pin holes, and to attachment mechanisms in the form of crimping pins, any other form of anchoring structures and corresponding attachment mechanisms are considered to be within the scope of the present invention.

Reference is now made to Figure 9, which shows a flow chart of a method for installing an intermediate transfer member, in accordance with an embodiment of the present invention.

Initially, a flexible elongate belt suitable for threading through a printing system, such as belt **614** (Figure 4), is obtained at step **800.**

Typically, the belt obtained at step **800** is ready for threading through the printing system, and may include a leader **(630,** Figure 4), lateral formations **(632,** Figure 4), a removable positioning arrangement **(670,** Fig. 7) and/or rebates formed at ends of the belt **(618,** Fig. 3).

In some embodiments, the method also includes preparing the belt for threading through the belt route of the printing system. Such preparation may include connecting a leader and/or lateral formations to the belt, connecting a removable positioning arrangement to free ends of the belt, and/or forming a rebate in each of the first and second free ends of the belt.

At step **806,** the elongate flexible belt **614** is threaded through the belt route of the printing system **10** (Figure 1). In some embodiments, this may be carried out by engaging the lateral formations **632** in the guiding channels **642** (Figure 5) of the printing system, for guiding said flexible elongate belt along the printing system.

Once the belt **614** is threaded through the belt route, when a leader **630** is used, the leader may optionally be removed from the belt, at step **808.** At step **810,** the free ends **610** and **612** are positioned above the heater **650** of the printing system (Figures 5, 6) such that the free ends abut one another, and the rebates **618** form a channel, as illustrated in Figures 3 and 7. In some embodiments, positioning the free ends **610** and **612** above the heater includes engaging positioning arrangement **670** of the belt **614** to the corresponding positioning arrangement 672 (Figure 7) of the heater **650,** so that the free ends **610** and **612** are in a fixed position relative to the heater **650** and the heating surface thereof.

At step **812,** the heat-curable tape **600** (Figure 2), which includes a substrate layer and a solid silicone rubber layer, is applied to the first and second free ends **610** and **612** of the belt **614.** In embodiments in which ends **610** and **612** include rebates forming a channel, the heat-curable tape **600** is placed within the channel. The heat-curable tape is placed such that the solid silicone rubber layer **604** (Figure 2) thereof faces the surface of belt **614** or of rebates **618.** In some embodiments, an adhesive layer is disposed between the tape **600** and the belt **614,** and holds the tape **600** in a fixed position relative to free ends **610** and **612,** until the tape is heat-cured onto the belt.

In some embodiments, following application of heat curable tape **600** to the free ends **610** and **612,** an adhesive layer is applied onto the exposed surface of tape **600** at step **813.** The adhesive layer may be adapted to fill any gaps between the rebates **618** and the tape **600.** In some embodiments, the adhesive layer may comprise a two component adhesive, which is mixed and applied onto heat curable tape **600** prior to curing thereof. For example, the adhesive may be a 3730 A&B adhesive, commercially available from Dow Corning of Midland, Michigan, USA.

Subsequently, at step **814,** the solid silicone rubber layer **604** is heat-cured to the first and second free ends **610** and **612** of belt **614,** so as to form a seam connecting the first and second free ends thereby converting the flexible elongate belt into an endless belt suitable for use as an ITM.

In some embodiments, heat-curing includes activating heater **650** to provide a temperature of at least 130°C for a duration in the range of 1 to 15 minutes, following heating up of the plate of heater **650,** uniformly across heat-curable tape **600.** In some such embodiments, heat-curing includes activating heater **650** to provide a first operative temperature in the range of 140°C to 180°C at the center of the heating surface of the heater, and to provide a second operative temperature in the range of 180C to 220C at ends of the heating surface, where the belt is thicker due to lateral formations **632.**

In some embodiments, the heater **650** is activated for a total duration of at most 5 minutes, at most 10 minutes, at most 15 minutes, at most 20 minutes, or at most 30 minutes, which total duration includes a duration in which heater **650** reaches the operational temperature and the duration of heat curing of tape **600.**

In some embodiments, in which positioning arrangement **670** was removably attached to belt **614,** following heat curing of tape **600,** the positioning arrangement is removed from the flexible belt, which is now an endless loop, at step **816.**

Following formation of the endless belt used as the ITM, the printing system may be operated at an operational temperature of 150°C for a duration of at least two weeks without failure of the seam and without separation between the two ends of the belt. In some embodiments, such operation of the printing system includes ink-jet printing an image onto a surface of the endless belt, rotating the endless belt to move the image from a printing station 300 (Figure 1) to an impression station **550** (Figure 1), and, at the impression station, transferring the image from the surface of the endless belt onto a substrate.

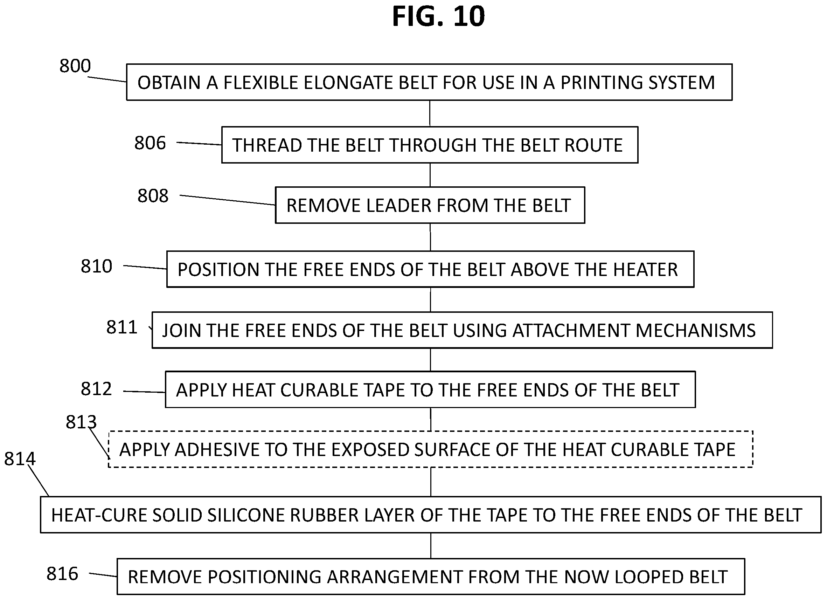

Reference is made to Figure 10, which shows another flow chart of a method for installing an intermediate transfer member, in accordance with an embodiment of the present invention. The method of Figure 10 is identical to the method diagrammed in the flow chart of Figure 9, except that step **811** has been added after step **810** and before **812.** Step **811** comprises the method step of at least temporarily connecting opposing free ends of the belt by use of attachment mechanisms. For example, step **811** may be accomplished using the crimping pins and crimping pin holes shown in Figures 8A to 8C. For example, such attachment may include the following actions:
- inserting a crimping pin **900** into two respective crimping pin holes **633_{L1}, 633_{R1}** in two lateral formations **632_{L1}, 632_{R1}** which can be manually brought into proximity to each other for this purpose.
- inserting an additional crimping pin **900** in respective crimping pin holes **633** of lateral formations **632** on the second lateral edge of the ends **610, 612** of the belt **614.**
- crimping the upper ends **903L, 903R** of upright members **902L, 902R** inward, for example using a crimping tool that has a strike plate, so as to securely fold down the upper ends **903L, 903R** on an upward-facing part of the lateral formations **632.**

Such connection of the crimping pins in the crimping pin holes creates an at-least-temporary securing of the two belt ends **610, 612** to each other before proceeding to step **812,** wherein the heat-curable tape is applied to the free ends **610, 612** of the belt **614.**

A crimping tool for closing the crimping pin 900 can be a separate tool, or existing elements of the printing system can be adapted or exploited for this purpose. In some embodiments, not all steps of the method are necessary.

### EXAMPLES

Reference is now made to the following examples, which together with the above description, illustrate the invention in a non-limiting fashion.

### EXAMPLE 1

### FORMING A HEAT-CURABLE TAPE

A substrate layer in the form of Taconic 7101 black commercially available from Taconic^{®} of Petersburgh, NY, USA, which includes a fiberglass layer coated with black silicone, and has a total thickness of 160µm, was used as the substrate layer.

A certain amount of Elsatosil^{®} R plus 4066/60, which is a heat-curable solid silicone rubber commercially available from Wacker Chemie of Munich, Germany, was applied onto the substrate layer and then manually extruded using an extruder to form a solid silicone rubber layer.

Two substrates formed of Poly-Ethylene Terephthalate (PET), each having a thickness of 100µm, were applied to the solid silicone rubber layer and to the black silicone coating layer of the substrate layer, and the resultant four-layer structure was flattened using Calendaring rolls until the solid silicone rubber layer had a thickness in the range of 90µm to 100µm.

Following calendaring, the PET layer was removed from the black silicone coating layer. The second PET layer was kept over the solid silicone rubber layer until the resulting heat-curable tape was ready for use, and was removed from the solid silicone rubber layer immediately prior to application of the tape.

The resulting tape had a total thickness of 240-250µm, excluding the protective PET layer.

### EXAMPLE 2

### COMPARA TIVE ANALYSIS OF SEAM FAILURE

The first and second ends of multiple elongate flexible belts were connected to each other at a seam to form an endless belt loop.

For belt #1, the ends were connected using an R4 adhesive, which is a condensation-cured adhesive tape currently used in the art. The adhesive tape was applied to the ends of the belt and cured thereto at room temperature.

For belts #2 and #3, the ends were connected using a D30 adhesive, which is an addition-cured adhesive formed of liquid silicone rubber. The adhesive was applied to the ends of the belt and cured thereto. For belt #2, curing took place at a temperature of 130°C for a duration of 20 minutes. For belt #3, curing took place at a temperature of 150°C for a duration of 20 minutes.

For belts #4 and #5, a heat curable tape was generated as described hereinabove in Example 1. The heat curable tape was then used to connect the ends of the belt by heat-curing of the tape. For belt #4, curing took place at a temperature of 130°C for a duration of 20 minutes. For belt #5, curing took place at a temperature of 150°C for a duration of 5 minutes.

Samples were taken from each of the belts, where each sample has a length of 200mm that includes, in the center of the sample the region of the seam connecting the first and second ends of the belt, and has a width of 20mm.

Each sample was placed in a Lloyd LS5 material tester, commercially available from Ametek^{®} Inc. of Brewyn, Pennsylvania, USA using chantillon grips and a load cell of 1kN. The grips held opposite ends of each sample, and the sample was pulled up with varying extension, until there was a failure in the seam, adhesive, or body of the belt.

Table 1 summarizes the conditions temperature under which each sample was tested, the load used when a failure occurred (in N/20mm), and the type of failure.

**TABLE 1**

| Belt | Testing temperature | Maximal load [N/20mm] | Failure type |
|---|---|---|---|
| #1 | Room temperature | 250 | Adhesion |
| #1 | 150°C | 150 | Adhesion |
| #2 | Room temperature | 220 | Adhesion |
| #3 | Room temperature | 450 | Seam |
| #4 | Room temperature | 220 | Adhesion |
| #4 | 150°C | 195 | Adhesion |
| #5 | Room temperature | 390 | Body |

An adhesion failure occurs when the seam or tape forming the seam disconnects from the belt, a seam failure occurs when the seam element, or tape forming the seam, tears or breaks, and a body failure occurs when the material of the belt rips due to the force applied to the sample, while the area of the seam remains intact.

As seen in Table 1, belt #4 and belt #5 whose ends were adhered using the heat-curable tape disclosed herein were able to resist a greater load than samples of the other belts, with the exception of the sample of belt #3. However, the curing conditions of that belt were at a relatively high temperature and for a relatively long duration (150C for 20 minutes) which may have contributed to the strength of the sample. Additionally, each of the belts was able to resist a greater load when tested in room temperature than when tested at an elevated temperature.

Additionally, Table 1 shows that for belt #4 and belt #5, when tested in the same conditions, belt #5 is able to resist a much greater load. This may be due to the fact that one characteristic of the solid silicone rubber used in the heat-curable tape is that the greater the heat density provided during curing of the tape, the stronger the resulting seam.

### EXAMPLE 3

### COMPARATIVE ANALYSIS OF SEAM PEELING

Each of three elongate flexible belts was treated to include an abraded area, in which the upper coating of the belt, forming the release layer, was removed from the belt using sanding paper. Each of the three flexible belts was further treated to include a grinded area, in which a portion of the belt material was removed using a grinding machine, for example for forming rebates as described hereinabove.

Each of the belts had a seam element applied and cured to it, under standard curing conditions for that seam element, in each of three areas: an untreated portion of the release layer, termed a release area, the abraded area, and the grinded area.

For belt #1, an R4 adhesive as described hereinabove with respect to Example 2 was condensation-cured onto belt #1 at the three areas, at room temperature.

For belts #2, a D30 adhesive, as described hereinabove with respect to Example 2, was addition-cured onto belt #2 at the three areas. Curing took place at a temperature of 130°C for a duration of 20 minutes.

For belts #3, a heat curable tape generated as described hereinabove in Example 1 was heat-cured onto the belt at the three areas. Curing took place at a temperature of 130C for a duration of 20 minutes.

Samples were taken from each of the areas of each of the belts, where each sample has a length of 200mm and a width of 15mm, and includes only the seam glued to the belt without surrounding areas.

Each sample was placed in a Lloyd LS5 material tester, commercially available from Ametek^{®} Inc. of Brewyn, Pennsylvania, USA, using TG34 grips, commercially available from Lloyd Instruments LTD of Bognor Regis, UK, and a load cell of 100N. One of the grips held part of the belt while the other grip held a portion of the seam element, and the sample was pulled to the sides with varying propagation, until the seam element was peeled off the belt. The measured peeling force is the average load of separation between the seam and the belt.

Table 2 summarizes, for each sample, the belt number, the area of the belt from which the sample was taken, and the force applied to peel the seam element off the belt.

**TABLE 2**

| Belt | Area | Peeling force [N] |
|---|---|---|
| #1 (R4) | Release | 0.1 |
| #1 (R4) | Grinded | 5.8 |
| #1 (R4) | Abraded | 1.8 |
| #2 (D30) | Release | 1.5 |
| #2 (D30) | Grinded | 6.5 |
| #2 (D30) | Abraded | 3.3 |
| #3 (Invention) | Release | 1.1 |
| #3 (Invention) | Grinded | 7.1 |
| #3 **(Invention)** | Abraded | 1.5 |

As seen in Table 2, for each of the seam elements or adhesives, the greatest peeling force was required when the seam element was applied to the grinded area, and the smallest peeling force was required when the seam element was applied to the release area.

Additionally, when comparing all the adhesives, the greatest peeling force was required when the heat-curable tape of the invention was applied to the grinded area, which is equivalent to the rebates formed in the belt as described hereinabove with respect to Figure 4.

### EXAMPLE 4

### COMPARATIVE ANALYSIS OF STRETCHING OF THE BELT AT A SEAM AREA AND AT AN AREA NOT INCLUDING THE SEAM

An elongate flexible belt was treated and seamed to form a closed loop by heat-curing a heat curable tape, generated as described hereinabove in Example 1, onto the belt. Curing took place at a temperature of 130C for a duration of 20 minutes.

Four samples were taken from the belt, two from an area including the seam, such that the seam was at the center of the samples, and two from an area not including the seam. From each area, one sample had a length of 100mm and another sample had a length of 200mm, and each sample had width of 20mm.

Each sample was placed in a Lloyd LS5 material tester, commercially available from Ametek^{®} Inc. of Brewyn, Pennsylvania, USA, using vice grips, commercially available from Ametek^{®} Inc. of Brewyn, Pennsylvania, USA, and a load cell of 100N. The grips held opposite ends of each sample, and the sample was pulled up and down with varying force up to 15N in each test cycle. The test included a total of 20 cycles. Following completion of the cycles, the slope of the final curve of the sample was obtained, and the spring constant of the sample was measured.

Table 3 summarizes the spring constant measured for each sample.

**TABLE 3**

| | Spring constant N/20mm | |
|---|---|---|
| Sample length | 100mm | 200mm |
| Belt only | 41 | 27 |
| Belt with seam | 37 | 24 |

As seen in Table 3, for each of the sample lengths, the spring constant of the belt only was greater than the spring constant of the belt including the seam tape. Additionally, a ratio between the spring constant measured for the belt including the seam tape and the belt alone, for samples having the same length, is in the range of 0.88-0.91.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the present disclosure has been described with respect to various specific embodiments presented thereof for the sake of illustration only, such specifically disclosed embodiments should not be considered limiting. Many other alternatives, modifications and variations of such embodiments will occur to those skilled in the art based upon Applicant's disclosure herein.

In the description and claims of the present disclosure, each of the verbs "comprise", "include" and "have", and conjugates thereof, are used to indicate that the object or objects of the verb are not necessarily a complete listing of features, members, steps, components, elements or parts of the subject or subjects of the verb.

As used herein, the singular form "a", "an" and "the" include plural references and mean "at least one" or "one or more" unless the context clearly dictates otherwise.

Unless otherwise stated, the use of the expression "and/or" between the last two members of a list of options for selection indicates that a selection of one or more of the listed options is appropriate and may be made.

Unless otherwise stated, adjectives such as "substantially" and "about" that modify a condition or relationship characteristic of a feature or features of an embodiment of the present technology, are to be understood to mean that the condition or characteristic is defined to within tolerances that are acceptable for operation of the embodiment for an application for which it is intended.

## Claims

1. A kit for installing an endless belt in a printing system, the kit comprising:
- a flexible belt having first and second free ends configured to be guided along the printing system;
- a heat-curable tape, comprising a substrate layer and a solid silicone rubber layer disposed thereon,
wherein said heat-curable tape is adapted to be applied onto said first and second free ends of said flexible belt, and to be heated so as to heat-cure said solid silicone rubber layer of said tape to the first and second free ends of the flexible belt, so as to form a seam connecting the first and second free ends thereby converting the flexible belt into an endless belt.

2. The kit of claim 1, wherein said flexible belt has at least one of the following properties:
a length within a range of 1 to 20 meters, 5 to 20 meters, 5 to 15 meters, 5 to 12 meters, or 7 to 12 meters;
a width within a range of 0.1 to 2.0 meters, 0.3 to 2.0 meters, 0.5 to 2.0 meters, 0.75 to 2.0 meters, 0.75 to 1.5 meters, or 0.75-1.25 meters; and
a thickness within a range of 50 to 3000µm, 100 to 3000µm, 200 to 3000µm, 200 to 1500µm, 300 to 1000µm, 300 to 800µm, 300 to 700µm, or 100 to 600µm.

3. The kit of any one of claims 1 or 2, wherein said solid silicone rubber comprises a thermosetting polymer.

4. The kit of any one of claims 1 to 3, wherein said substrate layer includes a fiberglass layer.

5. The kit of claim 4, wherein said substrate layer further includes a silicone coating layer, connected to said fiberglass layer.

6. The kit of any one of claims 1 to 5, wherein said substrate layer has a thickness in the range of 110µm to 170 µm.

7. The kit of any one of claims 1 to 6, wherein said solid silicone rubber layer has a thickness in the range of 20 µm to 120 µm.

8. The kit of any one of claims 1 to 7, wherein a ratio between a thickness of said solid silicone rubber layer and a thickness of said substrate layer is in the range of 0.10 to 0.75.

9. The kit of any one of claims 1 to 8, wherein a ratio between a thickness of said tape and a thickness of said belt is in the range of 0.15 to 11.15.

10. The kit of any one of claims 1 to 9, wherein a length of said heat curable tape is greater than a width of said flexible belt.

11. The kit of any one of claims 1 to 10, wherein a ratio between a width of said tape and a length of said belt is in the range of 0.01 to 0.03.

12. The kit of any one of claims 1 to 11, further comprising a heater adapted to be disposed beneath said heat curable tape when said heat curable tape is applied to said first and second ends of said flexible belt, and adapted to provide heat sufficient for heat-curing said solid silicone rubber of said heat-curable tape thereby to heat-cure said heat curable tape to form said endless belt.

13. The kit of any one of claims 1 to 12, wherein:
(i) the flexible belt includes a plurality of lateral formations along at least a portion of each lateral edge, and
(ii) at least one of the lateral formations on each lateral edge at each one of the free ends of the flexible belt includes an anchoring structure adapted for attachment to an attachment mechanism, which attachment mechanism is adapted for attaching ones of said laterally extending formations at opposing free ends of each lateral edge of the flexible belt.

14. The kit of claim 13, additionally including at least two attachment mechanisms each adapted to engage at least two said anchoring structures at opposing free ends of each lateral edge of said belt and to attach the laterally extending formations associated with said anchoring structures engaged by said attachment mechanism thereby to attach said opposing free ends of each lateral edge of the flexible belt.

## Patentansprüche

1. Kit zum Installieren eines Endlosriemens in einem Drucksystem, wobei das Kit umfasst:
- einen flexiblen Riemen mit einem ersten und einem zweiten freien Ende, die so konfiguriert sind, dass sie entlang des Drucksystems geführt werden können;
- ein heißaushärtendes Band, umfassend eine Substratschicht und eine darauf angeordnete feste Silikongummischicht,
wobei das heißaushärtende Band so angepasst ist, dass es auf das erste und zweite freie Ende des flexiblen Riemens aufgebracht werden kann und erhitzt werden kann, um die feste Silikongummischicht des Bandes an das erste und zweite freie Ende des flexiblen Riemens heißauszuhärten, um eine Naht zu bilden, die das erste und zweite freie Ende verbindet, wodurch der flexible Riemen in einen Endlosriemen umgewandelt wird.

2. Kit nach Anspruch 1, wobei der flexible Riemen mindestens eine der folgenden Eigenschaften aufweist:
eine Länge in einem Bereich von 1 bis 20 Meter, 5 bis 20 Meter, 5 bis 15 Meter, 5 bis 12 Meter oder 7 bis 12 Meter;
eine Breite in einem Bereich von 0,1 bis 2,0 Meter, 0,3 bis 2,0 Meter, 0,5 bis 2,0 Meter, 0,75 bis 2,0 Meter, 0,75 bis 1,5 Meter oder 0,75 bis 1,25 Meter; und
eine Dicke in einem Bereich von 50 bis 3000 µm, 100 bis 3000 µm, 200 bis 3000 µm, 200 bis 1500 µm, 300 bis 1000 µm, 300 bis 800 µm, 300 bis 700 µm oder 100 bis 600 µm.

3. Kit nach einem der Ansprüche 1 oder 2, wobei der feste Silikongummi ein wärmehärtendes Polymer umfasst.

4. Kit nach einem der Ansprüche 1 bis 3, wobei die Substratschicht eine Glasfaserschicht enthält.

5. Kit nach Anspruch 4, wobei die Substratschicht ferner eine Silikonbeschichtungsschicht enthält, die mit der Glasfaserschicht verbunden ist.

6. Kit nach einem der Ansprüche 1 bis 5, wobei die Substratschicht eine Dicke in dem Bereich von 110 µm bis 170 µm aufweist.

7. Kit nach einem der Ansprüche 1 bis 6, wobei die feste Silikongummischicht eine Dicke in dem Bereich von 20 µm bis 120 µm aufweist.

8. Kit nach einem der Ansprüche 1 bis 7, wobei ein Verhältnis zwischen einer Dicke der festen Silikongummischicht und einer Dicke der Substratschicht in dem Bereich von 0,10 bis 0,75 liegt.

9. Kit nach einem der Ansprüche 1 bis 8, wobei ein Verhältnis zwischen einer Dicke des Bandes und einer Dicke des Riemens in dem Bereich von 0,15 bis 11,15 liegt.

10. Kit nach einem der Ansprüche 1 bis 9, wobei eine Länge des heißaushärtenden Bandes größer als eine Breite des flexiblen Riemens ist.

11. Kit nach einem der Ansprüche 1 bis 10, wobei ein Verhältnis zwischen einer Breite des Bandes und einer Länge des Riemens in dem Bereich von 0,01 bis 0,03 liegt.

12. Kit nach einem der Ansprüche 1 bis 11, ferner umfassend einen Heizer, der so angepasst ist, dass er unter dem heißaushärtenden Band angeordnet werden kann, wenn das heißaushärtende Band an dem ersten und zweiten Ende des flexiblen Riemens angebracht wird, und der so angepasst ist, dass er ausreichend Wärme bereitstellt, um den festen Silikongummi des heißaushärtenden Bandes heißauszuhärten, wodurch das heißaushärtende Band unter Bildung des Endlosriemens heißausgehärtet wird.

13. Kit nach einem der Ansprüche 1 bis 12, wobei
(i) der flexible Riemen eine Vielzahl von seitlichen Ausbildungen entlang mindestens eines Abschnitts jeder seitlichen Kante umfasst, und
(ii) mindestens eine der seitlichen Ausbildungen an jeder seitlichen Kante an jedem der freien Enden des flexiblen Riemens eine Verankerungsstruktur enthält, die zur Befestigung an einem Befestigungsmechanismus angepasst ist, wobei der Befestigungsmechanismus zur Befestigung einer der sich seitlich erstreckenden Formationen an gegenüberliegenden freien Enden jeder seitlichen Kante des flexiblen Riemens angepasst ist.

14. Kit nach Anspruch 13, das zusätzlich mindestens zwei Befestigungsmechanismen enthält, die jeweils so angepasst sind, dass sie mit mindestens zwei der Verankerungsstrukturen an gegenüberliegenden freien Enden jeder seitlichen Kante des Riemens in Eingriff kommen und die sich seitlich erstreckenden Formationen, die mit den Verankerungsstrukturen verbunden sind, die mit dem Befestigungsmechanismus in Eingriff stehen, befestigen, wodurch die gegenüberliegenden freien Enden jeder seitlichen Kante des flexiblen Riemens befestigt werden.

## Revendications

1. Un kit pour installer une courroie dans un système d'impression, le kit comprenant :
- un ruban flexible ayant des première et deuxième extrémités libres configurées pour être guidées le long du système d'impression ;
- une bande thermodurcissable, comprenant une couche de substrat et une couche de caoutchouc de silicone solide agencée sur celle-ci,
ladite bande thermodurcissable étant conçue pour être appliquée sur lesdites première et deuxième extrémités libres dudit ruban flexible, et pour être chauffée de manière à thermodurcir ladite couche de caoutchouc de silicone solide de ladite bande aux première et deuxième extrémités libres du ruban flexible, de manière à former une jonction reliant les première et deuxième extrémités libres, transformant ainsi le ruban flexible en une courroie.

2. Le kit selon la revendication 1, dans lequel ladite courroie présente au moins l'une des propriétés suivantes :
une longueur comprise entre 1 et 20 mètres, 5 à 20 mètres, 5 à 15 mètres, 5 à 12 mètres ou 7 à 12 mètres ;
une largeur comprise entre 0,1 et 2,0 mètres, 0,3 et 2,0 mètres, 0,5 et 2,0 mètres, 0,75 et 2,0 mètres, 0,75 à 1,5 mètre ou 0,75 et 1,25 mètre ; et
une épaisseur comprise entre 50 et 3000µm, 100 à 3000µm, 200 à 3000µm, 200 à 1500µm, 300 à 1000µm, 300 à 800µm, 300 à 700µm ou 100 à 600µm.

3. Le kit selon l'une quelconque des revendications 1 ou 2, dans lequel ledit caoutchouc de silicone solide comprend un polymère thermodurcissable.

4. Le kit selon l'une quelconque des revendications 1 à 3, dans lequel ladite couche de substrat comprend une couche de fibre de verre.

5. Le kit selon la revendication 4, dans lequel ladite couche de substrat comprend en outre une couche de revêtement en silicone, reliée à ladite couche de fibre de verre.

6. Le kit selon l'une quelconque des revendications 1 à 5, dans lequel ladite couche de substrat a une épaisseur comprise entre 110µm et 170µm.

7. Le kit selon l'une quelconque des revendications 1 à 6, dans lequel ladite couche de caoutchouc de silicone solide a une épaisseur comprise entre 20µm et 120µm.

8. Le kit selon l'une quelconque des revendications 1 à 7, dans lequel un rapport entre une épaisseur de ladite couche de caoutchouc de silicone solide et une épaisseur de ladite couche de substrat est compris entre 0,10 et 0,75.

9. Le kit selon l'une quelconque des revendications 1 à 8, dans lequel un rapport entre une épaisseur de ladite bande et une épaisseur dudit ruban est compris entre 0,15 et 11,15.

10. Le kit selon l'une quelconque des revendications 1 à 9, dans lequel une longueur de ladite bande thermodurcissable est supérieure à une largeur dudit ruban flexible.

11. Le kit selon l'une quelconque des revendications 1 à 10, dans lequel un rapport entre une largeur de ladite bande et une longueur dudit ruban est compris entre 0,01 et 0,03.

12. Le kit selon l'une quelconque des revendications 1 à 11, comprenant en outre un élément chauffant adapté pour être disposé sous ladite bande thermodurcissable lorsque ladite bande thermodurcissable est appliquée auxdites première et deuxième extrémités dudit ruban flexible, et adapté pour fournir une chaleur suffisante pour thermodurcir ledit caoutchouc de silicone solide de ladite bande thermodurcissable, de manière à thermodurcir ladite bande thermodurcissable pour former ladite courroie.

13. Le kit selon l'une quelconque des revendications 1 à 12, dans lequel :
(i) le ruban flexible comprend une pluralité de formations latérales le long d'au moins une partie de chaque bord latéral, et
(ii) au moins l'une des formations latérales sur chaque bord latéral à chacune des extrémités libres du ruban flexible comprend une structure d'ancrage conçue pour être fixée à un mécanisme de fixation, lequel mécanisme de fixation est conçu pour fixer l'une desdites formations s'étendant latéralement aux extrémités libres opposées de chaque bord latéral du ruban flexible.

14. Le kit selon la revendication 13, comprenant en outre au moins deux mécanismes de fixation chacun conçu pour venir en prise avec au moins deux desdites structures d'ancrage aux extrémités libres opposées de chaque bord latéral dudit ruban et pour fixer les formations s'étendant latéralement associées auxdites structures d'ancrage avec lesquelles ledit mécanisme de fixation est en engagement, pour, ce faisant, fixer lesdites extrémités libres opposées de chaque bord latéral du ruban flexible.
